# EUROPEAN PATENT SPECIFICATION

(11) **EP 0 669 595 B1**
(45) Date of publication and mention of the grant of the patent: **31.01.2001**
(21) Application number: 95301124.4
(22) Date of filing: 22.02.1995
(51) Int. Cl.: G06K 11/18, G06K 11/20

(54) **Digitizer tablet and stylus**
Digitalisiertablett und Stift
Tableau à numériser et stylo

(30) Priority: 23.02.1994 US 200721
(43) Date of publication of application: 30.08.1995
(73) Proprietor: HYUNDAI ELECTRONICS AMERICA, Milpitas, California 95035 (US)
(72) Inventor: Gasparik, Frank, Monument, CO 80132 (US)
(74) Representative: Gill, David Alan

(56) References cited:
- EP-A- 0 344 897
- EP-A- 0 368 351
- EP-A- 0 432 139

## Description

The present invention relates to improvements in digitizer and stylus apparatus.

In particular, the invention concerns telemetry between a stylus and a digitizer tablet, wherein the stylus can deliver status reports about its condition to the tablet.

Problems can arise however in the transfer of a telemetry signal because of the interaction of several factors. For example, when the position of the stylus is being detected, the carrier is occupied, and cannot be used for telemetry or other data transfer. Thus, since telemetry and position detection cannot occur simultaneously, the stylus must operate so that the telemetry and position detection signals alternate with each other.

Further, if position detection should require longer time periods, then the telemetry periods must be correspondingly shortened. For example, if handwriting, which is written by the stylus on the digitizing tablet, is to be recognized by the computer, then the stylus position must be monitored for a relatively long time, thereby reducing the time intervals available for telemetry.

Reduction of the telemetry time intervals means that a higher data rate in each interval must be used, in order to transmit a required amount of data. However, a higher data rate is generally not feasible because the signal of the stylus is limited to a specific bandwidth. The bandwidth determines the maximum data rate.

Further, the bandwidth limit imposes a lower limit on the settling time of the signal. The limit on settling time, in effect, extends the duration of each pulse.

The increased duration of each individual pulse decreases the total number of pulses which can be transmitted in a given time interval.

Therefore, the reduction in the time intervals allocated to telemetry, and the limited bandwidth allowed for the position signal, limit the amount of data which can be delivered. It is expected that, as time progresses, larger amounts of data such as telemetry data will be transmitted and so the aforementioned problems will become increasingly disadvantageous.

Prior art document EP-A-0 432 139 discloses a stylus arrangement in which information is arranged to be transferred from the stylus by means of a cord and/or ultrasonic waves or infra-red rays and which allows for two separate sets of information signals to be transferred at the same time.

The present invention seeks to provide stylus and digitizer tablet having advantages over such known apparatus.

According to one aspect of the present invention there is provided a digitizer tablet for receiving signals from a stylus, the stylus being arranged for producing a stylus position determining signal and a data signal, characterized in that said stylus includes first signal producing means for producing said stylus position determining signal and second signal producing means for producing said data signal, said first and second signal producing means being arranged such that a data signal can be delivered from the stylus at the same time as a stylus position determining signal, and the tablet including first filter means having a pass band centred at a first frequency F1, and zeros at other frequencies, and second filter means having a pass band centred at a second frequency F2, which coincides with a zero of said first filter.

According to another aspect of the present invention there is provided a digitizer tablet for receiving signals from a stylus, the stylus being arranged for producing a stylus position determining signal and a data signal, characterized in that said stylus includes first signal producing means for producing said stylus position determining signal and second signal producing means for producing said data signal, said first and second signal producing means being arranged such that a data signal can be delivered from the stylus at the same time as a stylus position determining signal, and the tablet including first filter means for blocking a first frequency band of a signal produced by said stylus and second filter means for passing said first frequency band.

According to yet another aspect of the present invention there is provided a digitizer tablet for receiving signals from a stylus, the stylus being arranged for producing a stylus position determining signal and a data signal, characterized in that said stylus (6) includes first signal producing means for producing said stylus position determining signal and second signal producing means for producing said data signal, said first and second signal producing means being arranged such that a data signal can be delivered from the stylus at the same time as a stylus position determining signal, and the tablet including filter means for tracking any drift that may occur in the frequency of one of the signals, maintaining a pass band centred on the tracked signal, and maintaining a zero centred on the other signal.

Further embodiments of the invention are defined in claims 4 to 10.

The present invention does not suffer the disadvantages found in the prior art.

It will therefore be appreciated that the present invention is particularly advantageous in that it can provide for a stylus for use with a digitizer tablet, which has a channel dedicated exclusively to data signal generation such as in telemetry.

The invention is described further hereinafter, by way of example only, with reference to the accompanying drawings in which :
Fig. 1 and 2 illustrate a digitizer tablet;
Fig. 3 and 4 illustrate how the stylus in Figs. 1 and 2 induces currents in the digitizer tablet;
Fig. 5 illustrates highly simplified current paths on the digitizer tablet;
Fig. 6 illustrates a pulse-modulated carrier, and the settling time TS;
Fig. 7 illustrates a stylus containing two oscillators, which produce two signals at different frequencies;
Fig. 8 illustrates the operation of apparatus embodying the present invention;
Fig. 9 illustrates a generic transfer characteristic of the filters, together with an enlarged view of the two transfer characteristics, shown in Fig. 8;
Fig. 10 illustrates the two sidebands occurring when a telemetry frequency, Fc, is amplitude-modulated by a tone at a frequency Ft;
Fig. 11 illustrates how the bandwidth occupied by the sidebands in Fig. 10 is sufficiently small that FILTER 1 blocks these sidebands;
Fig. 12 illustrates another form of the invention;
Fig. 13 illustrates how a synchronous detector has the effect of producing the zeros shown in Fig. 9; and
Fig. 14A illustrates how integration of a sine wave produces a zero result over one period, by comparison to a triangular wave, shown in Fig. 14B.

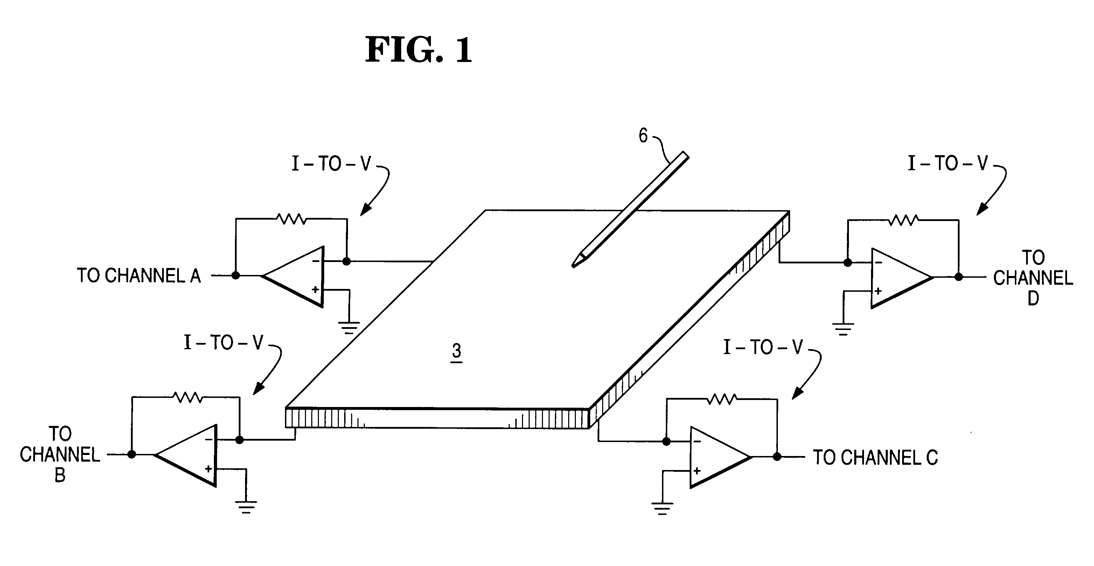

Fig. 1 is a highly simplified view of a digitizer tablet 3 and its associated stylus 6. The digitizer tablet 3 can take the form of a transparent overlay on the display of a portable computer (not shown): the tablet-and-stylus combination then provides input to the computer.

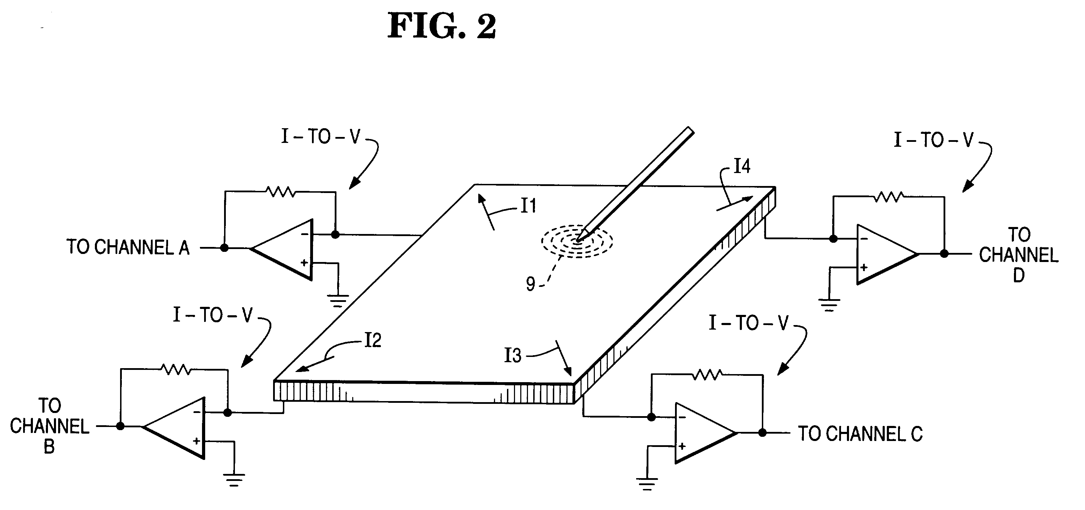

In the tablet 3, there are four current-to-voltage amplifiers (labelled I-to-V), one at each corner. The stylus 6, when activated, produces a signal 9, as indicated in Fig. 2. This signal induces currents I1 - I4, which are detected by the I-to-V amplifiers.

The I-to-V amplifiers each produce a voltage (V) indicative of the size of its respective current (I). Processing circuitry, not shown but known in the art, receives the voltage signals, and computes the position of the stylus signal 6.

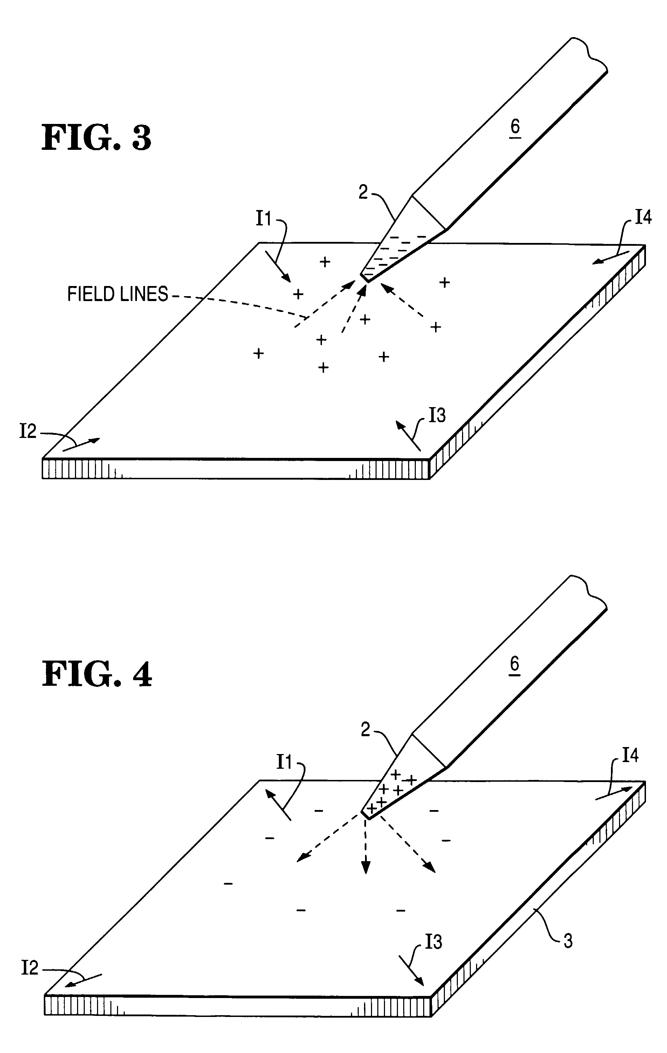

The currents I1 - I4 are induced because the stylus 6 acts as one plate of a capacitor. The digitizer tablet (which bears a resistive surface, or grid, of a material such as indium tin oxide) acts as the other plate. As Fig. 3 indicates, when negative charge is applied to the tip 2 of the stylus 6, a positive charge is induced on the surface of the tablet 6. Currents I1 - I4 supply this positive charge.

Conversely, as in Fig. 4, a positive charge on the tip 2 of the stylus 6 induces a negative charge on the tablet. The currents I1 - I4 supply this negative charge.

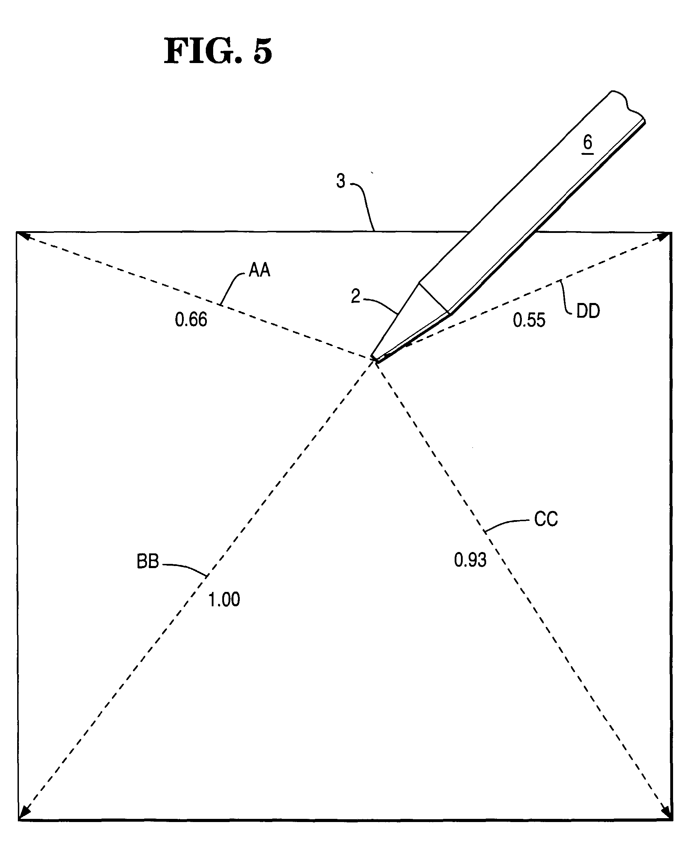

As Fig. 5 shows, each current can be viewed as following a direct path from the stylus to one corner of the tablet. The resistance of each path depends on the length of the path. The size of the current depends on the resistance. Thus, knowledge of the current allows one to infer the path length. A highly simplified example will illustrate.

It should be assumed that the stylus in Fig. 5 represents a voltage source applied to the tablet. The paths have the relative lengths shown in Fig. 5, and also listed in the following Table.

**TABLE**

| PATH | RELATIVE LENGTH | RELATIVE RESISTANCE | RELATIVE CURRENT | RELATIVE I-to-V VOLTAGE |
|---|---|---|---|---|
| AA | 0.66 | 0.66 | 1.52 | 1.52 |
| BB | 1.00 | 1.00 | 1.00 | 1.00 |
| CC | 0.93 | 0.93 | 1.08 | 1.08 |
| DD | 0.55 | 0.55 | 1.82 | 1.82 |

The resistance of each path depends on its length, so that the relative resistances are in proportion to the relative path lengths, as indicated in the Table.

The current flowing equals the voltage divided by the resistance, V/R, so that the relative currents will be inversely proportional to the relative path lengths, as indicated in the Table.

The I-to-V amplifiers in Fig. 1 each produce a voltage which is proportional to its respective current. Thus, the outputs of the I-to-V amplifiers have the relative magnitudes indicated in the Table. The output signals can be used to compute the position of the stylus, as stated above.

A stylus often has the requirement to pass data signals to the tablet in addition to supplying a position detection signal such as signal 9 in Fig. 2. For example, the stylus can contain circuitry which monitors battery charge, and other characteristics, and informs the computer, via the digitizing tablet, of these characteristics. The information is transferred by modulating the signal produced by the stylus (indicated as "9" in Fig. 2). The signal becomes a modulated carrier, and the information transfer comprises telemetry.

Problems can arise however in the transfer of a telemetry signal because of the interaction of several factors. For example, when the position of the stylus is being detected, the carrier is occupied, and cannot be used for telemetry or other data transfer. Thus, since telemetry and position detection cannot occur simultaneously, the stylus must operate so that the telemetry and position detection signals alternate with each other.

Further, if position detection should require longer time periods, then the telemetry periods must be correspondingly shortened. For example, if handwriting, which is written by the stylus on the digitizing tablet, is to be recognized by the computer, then the stylus position must be monitored for a relatively long time, thereby reducing the time intervals available for telemetry.

Reduction of the telemetry time intervals means that a higher data rate in each interval must be used, in order to transmit a required amount of data. However, a higher data rate is generally not feasible because the signal of the stylus is limited to a specific bandwidth. The bandwidth determines the maximum data rate.

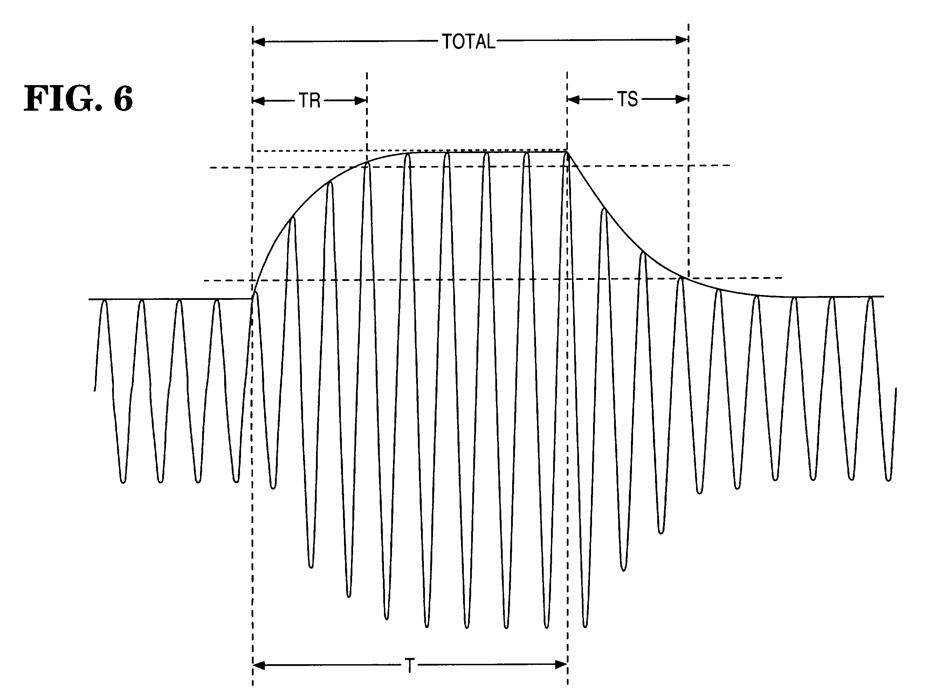

Further, the bandwidth limit imposes a lower limit on the settling time of the signal, which is illustrated as TS in Fig. 6. The limit on settling time, in effect, extends the duration of each pulse, from the ideal of T in Fig. 6, to the TOTAL duration indicated.

The increased duration of each individual pulse decreases the total number of pulses which can be transmitted in a given time interval.

Therefore, the reduction in the time intervals allocated to telemetry, and the limited bandwidth allowed for the position signal 9, limit the amount of data which can be delivered. It is expected that, as time progresses, larger amounts of data such as telemetry data will be transmitted and so the aforementioned problems will become increasingly disadvantageous.

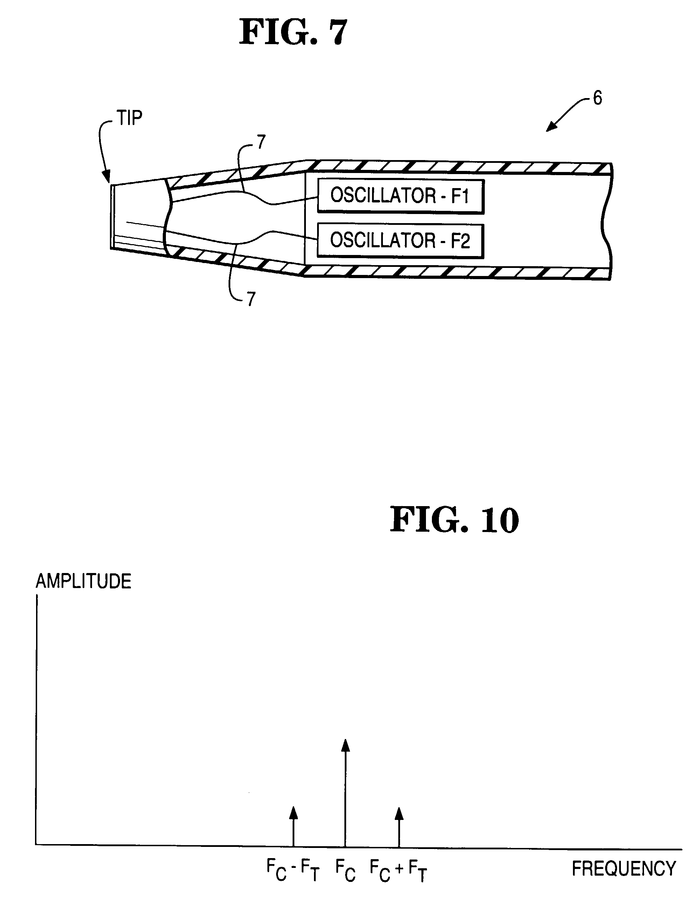

Fig. 7 illustrates a stylus 6 according to an embodiment of the present invention containing two oscillators, which generate two signals of two different frequencies F1 and F2. The signals are delivered to the stylus TIP by conductors 7. In the embodiments described, one frequency, F1, is for example 125 KHz, and is used as the position signal 9 in Fig. 2. The other frequency is used for data transfer, for example telemetry, and runs at a specific multiple of F1, such as at 250 KHz, 500 KHz, or 750 KHz. A frequency of 250 KHz will be assumed at present for the description of the illustrated embodiments.

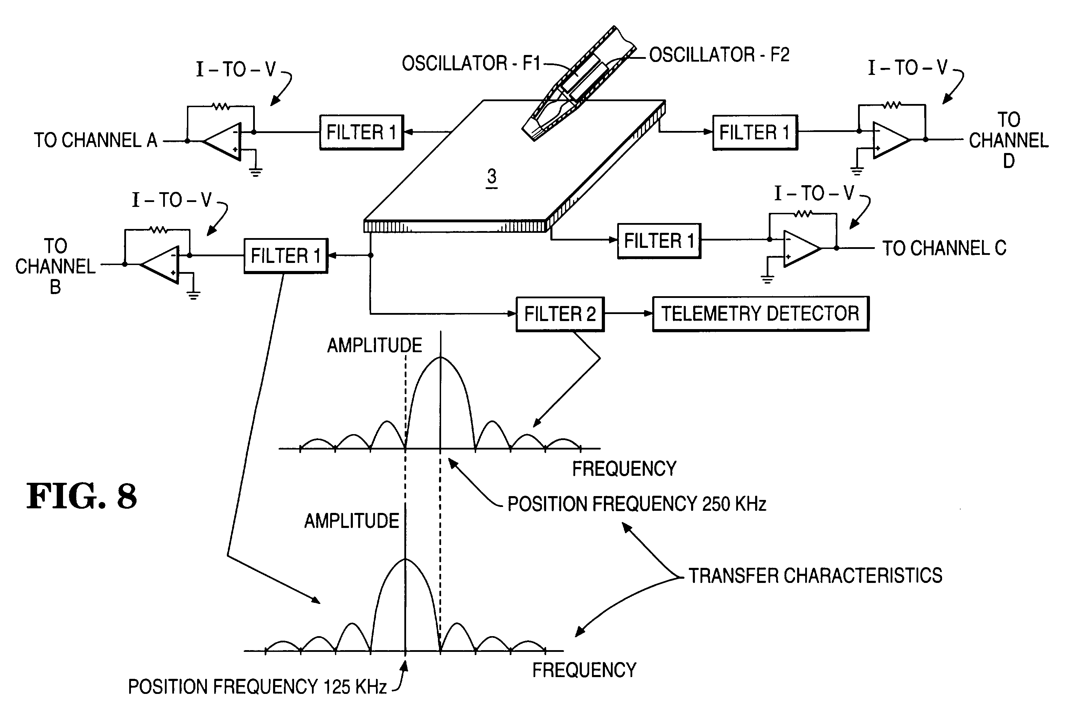

Fig. 8 shows the stylus 6, together with a digitizer tablet 3 according to an embodiment of the present invention and which can take the form of a transparent overlay upon the display of a portable computer. The use of tablets with computers is known in the art. The stylus transmits the two signals of frequencies F1 and F2. (The two frequencies may be simultaneously transmitted, if telemetry and position are to be undertaken at the same time, but simultaneous transmission at all times may not always be required.)

The tablet contains one or more receivers which receive the two signals which can effectively comprise carrier signals and feeds them to the FILTERs indicated in the Fig. 8. FILTER 1 has the transfer characteristic shown, which is centred about a frequency of 125 KHz. Each FILTER 1 (there are four such filters) passes the 125 KHz position signal to a respective I-to-V amplifier, which produces a signal which is fed to an analysis system (not shown). The analysis system computes the stylus position.

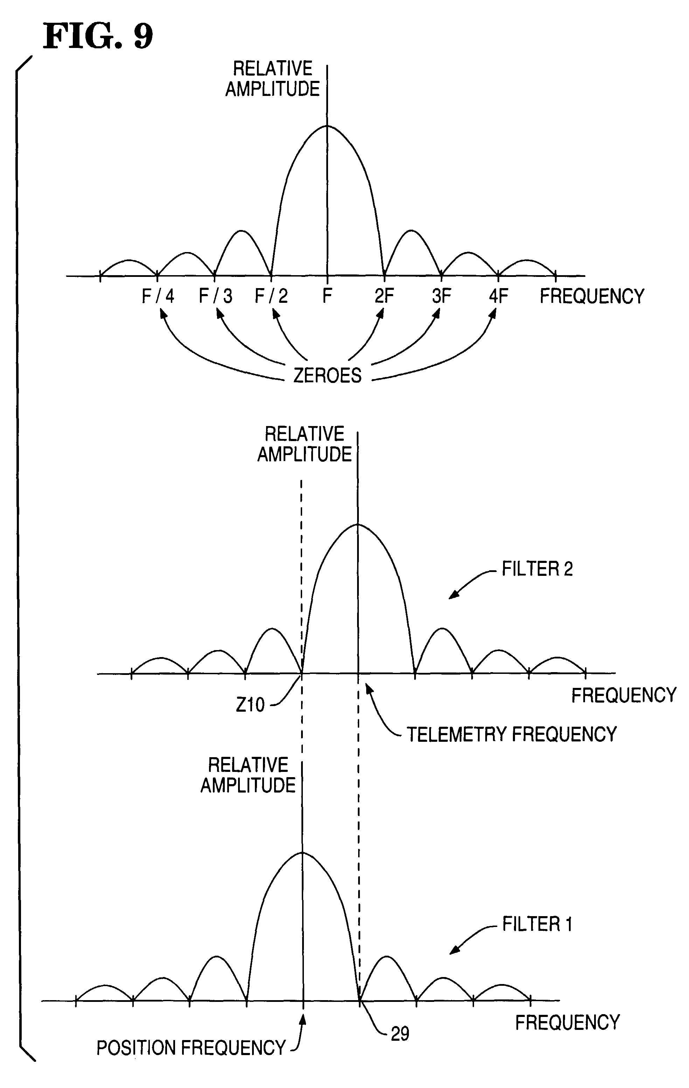

Each FILTER 1 blocks the telemetry carrier. However, the telemetry carrier can be passed by FILTER 2, which is centred about one of the zeros of FILTER 1, as indicated. The zeros are more clearly indicated in Fig. 9. In this example, FILTER 2 is centred about 250 KHz. FILTER 2 passes the telemetry signal of 250 KHz produced by the stylus, but blocks the 125 KHz position signal.

Therefore, two signals, namely, a position signal and a telemetry signal, are transmitted simultaneously to the digitizer tablet 3 by the stylus 6. Circuitry internal to the tablet processes the position signal, and ascertains stylus position. Other circuitry processes the telemetry signal, which is actually a modulated carrier, and obtains information transmitted by the stylus.

In another embodiment, data also can be carried by the position signal (125 KHz in the example above). That is, the position signal can be arranged to alternate between providing position information and carrying data, as discussed with reference to the prior art. In addition, a data signal (250 KHz in the example above) can also be transmitted continually, or as often as desired from the dedicated data or telemetry channel. Thus, the two signals can carry telemetry data, i.e. the 125 KHz position signal, when not transmitting position information, and the 250 KHz data signal when desired.

It should be appreciated that the telemetry signal need not be centred at the particular zero shown in Fig. 8, but can be located at any of them, such as F/4, F/3, F/2, 2F, 3F, or 4F, as shown in Fig. 9. Some zeros are located at integral multiples of the position signal, such as 2 x 125 KHz, 3 x 125 KHz, 4 x 125 KHz, and so on. Others are located at integral fractional multiples, such as 1/2 x 125 KHz, 1/3 x 125 KHz, 1/4 x 125 KHz, or, more generally, 1/n x (125 KHz), and so on.

Also the filters shown in the examples have mutual, blocking zeros. That is, in Fig. 9, zero Z10 of the telemetry-passing filter (FILTER 2) blocks the position signal, while zero 29 of the position-passing filter (FILTER 1) blocks the telemetry signal.

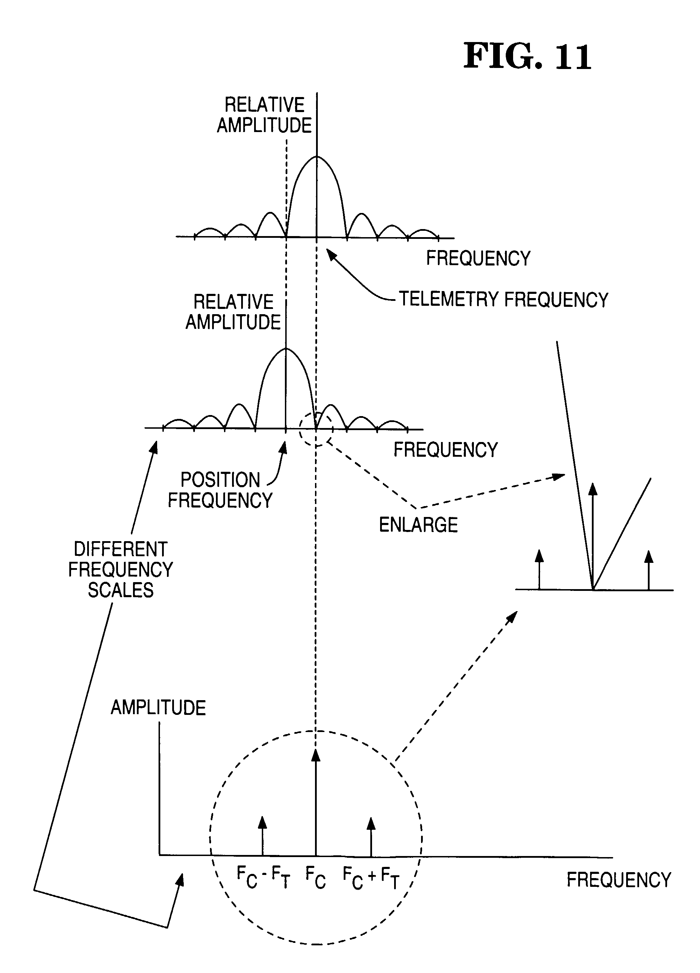

In general, modulation of the telemetry carrier increases its bandwidth. That is, as a simple example, if a carrier of frequency Fc in Fig. 10 is modulated by a tone of frequency Ft, then the resulting signal spectrum is that shown. The resulting spectrum has a carrier C and two sidebands, one at Fc + Ft and the other at Fc - Ft. This roughly indicates how the bandwidth increases when the telemetry carrier, generated by the stylus, is modulated.

This increase in bandwidth is very small, if the modulation frequency is small. Thus, the overall signal spectrum is so close to the zero of FILTER 1, that the telemetry signal is effectively blocked, as indicated in Fig. 11.

In actuality, the frequency spectrum occupied by the telemetry signal will be the simple, discrete triplet shown in Fig. 9.

Advantageously, a telemetry data rate of 3900 bits per second can be attained, but, in practice, to conserve power in the battery-powered stylus, a data rate of about 500 bits per second is preferred.

The invention is not limited to the filters having the particular transfer characteristics described above. One inventive concept is to filter the telemetry carrier from the position signal particularly if one of the data signal and position signal delivered at the same time from the stylus is modulated by the other. To do this, suitable combinations of bandpass, or notch filters, can be used.

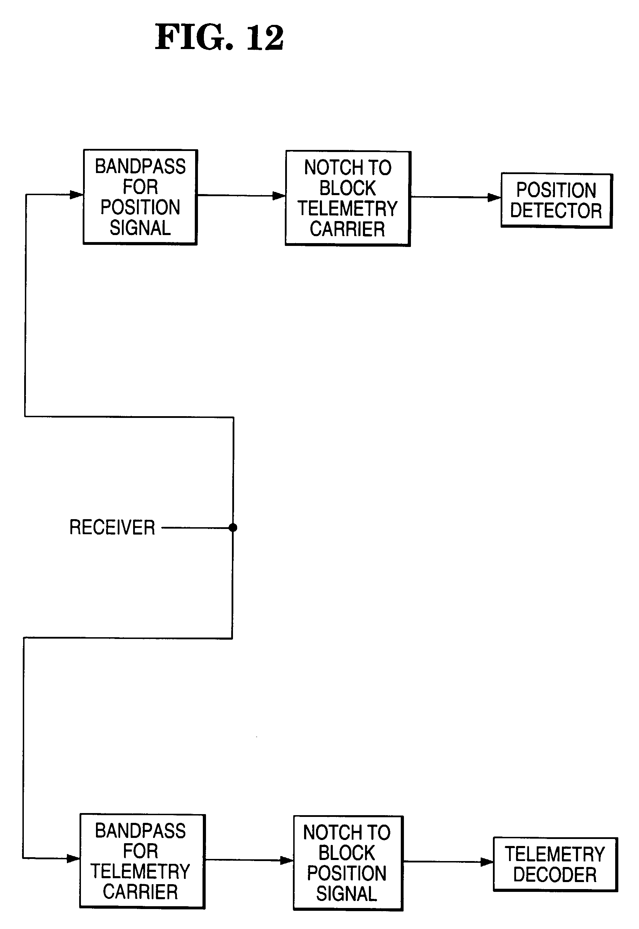

For example, as shown in Fig. 12, in principle, one bandpass filter, centred at the position signal frequency, can pick off the position carrier, and block the telemetry signal. A second bandpass filter, centred at the telemetry carrier's frequency, can pick off the telemetry carrier and block the position signal. A notch filter can be added to either or both for additional suppression of the signal to be blocked, as indicated.

It was stated that these filters can be used "in principle," because technical difficulties will inhibit their effectiveness. For example, the oscillator within the stylus may drift in frequency, but the frequency characteristics of such filters will remain the same. Thus, if drift occurs, these filters will no longer provide zeros in Fig. 9 at the correct locations.

The invention can provide the benefit of a filter having zeros which track the frequency of the oscillator, as discussed in the following section.

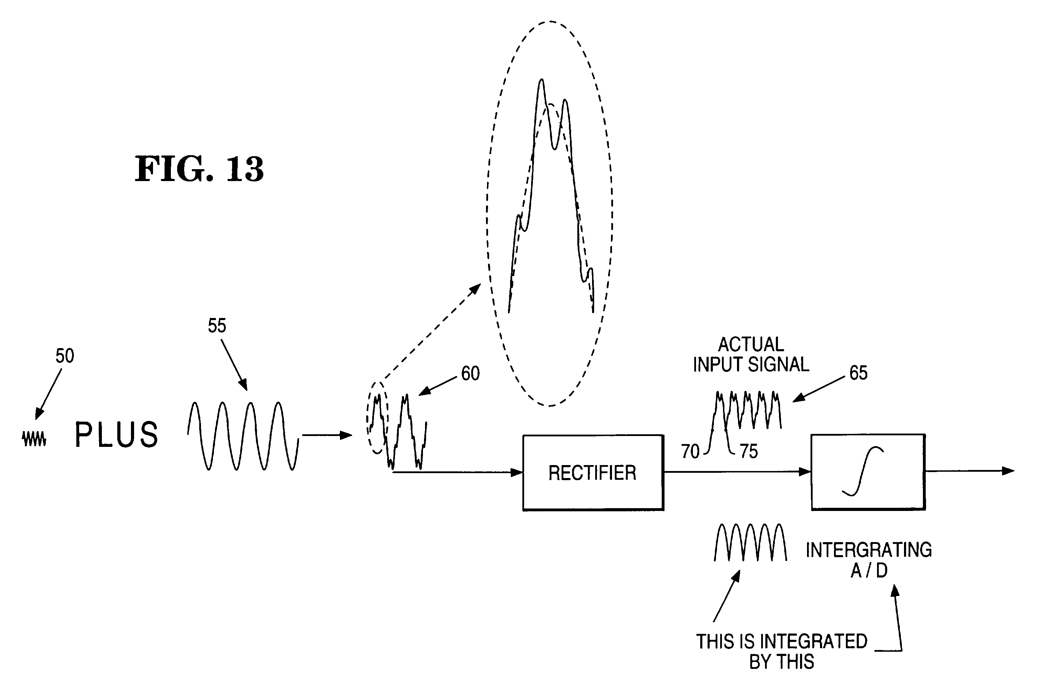

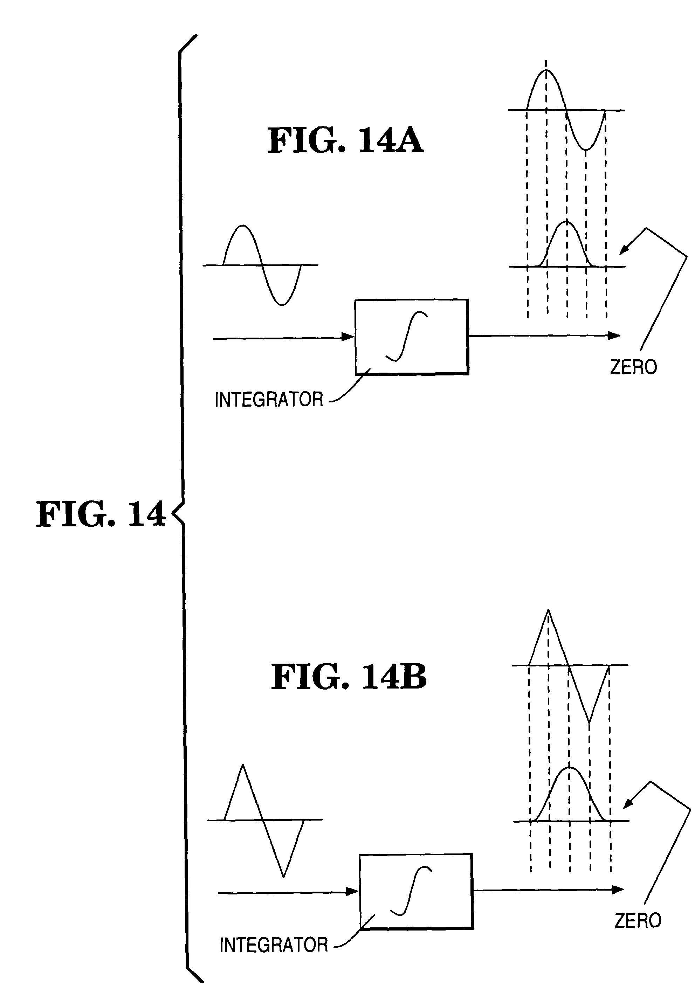

The invention can advantageously utilize a synchronous coherent detector. One example is shown in Fig. 13. This type of detector exploits the fact that a sine wave integrates to zero, when integrated over an integral number of periods. Fig. 14 illustrates this zero result.

For simplicity, Fig. 14B illustrates a triangular wave. During integration, the area of the upper peak cancels the area of the lower peak. The sum is zero, as indicated.

Integration of the sine wave in Fig. 14A, although mathematically slightly more complicated, has the same property of integrating to zero over one period.

This property of integrating to zero still exists, even if the sine wave is superimposed on a carrier wave, as shown in Fig. 13. In Fig. 13, a high-frequency sine wave 50 (representing the telemetry signal) is added to a low-frequency sine wave 55 (representing the position signal). The resulting signal 60 is a modulated sine wave. This modulated sine wave is the composite signal broadcast by the stylus and so comprises the telemetry signal and position signal that can be delivered at the same time from the staus 6.

The illustrated embodiment of the invention rectifies the stylus signal 60, producing the rectified signal 65. The illustrated embodiment of the invention then integrates the rectified signal 65, in order to produce a standing voltage which can be converted to a digital word, by an analog-to-digital conversion, or A/D.

However, the integration is not done continuously, but periodically, and for time periods equal to the period of the rectified signal 65. That is, the INTEGRATING A/D is clocked at a rate equal to the frequency of the signal 65. For example, as to signal 65, one integration cycle begins at point 70, and ends at point 75.

Because this clock rate is an integral fractional multiple of the telemetry frequency (signal 50), and because the telemetry signal is not rectified, the telemetry signal integrates to zero over each integrating period. However, because the position signal has been rectified, and undergoes no negative swings, it does not integrate to zero, but to some positive voltage, which is processed by the A/D circuitry (not explicitly shown).

The clocking frequency is derived from the received signal 60. Phase-locked-loop (PLL) circuitry, known in the art, detects the incoming signal 60, and produces a pulse train of identical frequency. This pulse train is used to clock the INTEGRATING A/D.

A more complex mathematical analysis can be undertaken to show that the apparatus of Fig. 14 acts as the sinx / x filter whose transfer function is shown in Fig. 9.

A major advantage of using this type of filter is that the PLL tracks the frequency of signal 60 (and thus of signal 55), and maintains the centre of the transfer function at this frequency, which is the POSITION FREQUENCY shown in Fig. 9, even if the POSITION FREQUENCY drifts.

This system, in Fig. 13, suppresses the telemetry signal, and extracts the position signal. A second, similar, system can be advantageously employed to suppress the position signal and extract the telemetry signal.

It should be emphasized that the position signal 9 in Fig. 2 is functionally different from the data or telemetry signal, at least in the following respect. When stylus position is being detected, the stylus transmits the same position signal, no matter where the stylus is located. Restated, at the very instant when the stylus signal leaves the stylus, there is no position information contained in it. Position information is derived from the currents induced by the signal, as discussed above.

In contrast, telemetry information is, in fact, contained in the telemetry signal at the instant when it leaves the stylus.

Thus, even though position information is derived from the position signal, the stylus is not transmitting position information.

Two oscillators have been discussed herein. However, it is recognized that two different frequencies can be obtained from a single oscillator by frequency multiplication and division techniques and such means are within the scope of the present invention.

As will be appreciated the invention can provide for stylus, and associated digitizer tablet apparatus, having a synchronous telemetry channel.

The invention is not restricted to the details of the foregoing embodiments and numerous substitutions and modifications can be undertaken without departing from the true spirit and scope of the invention.

## Claims

1. A digitizer tablet for receiving signals from a stylus, the stylus (6) being arranged for producing a stylus position determining signal (55) and a data signal (50), characterized in that said stylus (6) includes first signal producing means for producing said stylus position determining signal and second signal producing means for producing said data signal, said first and second signal producing means being arranged such that a data signal (5) can be delivered from the stylus (6) at the same time as a stylus position determining signal (55), and the tablet including first filter means having a pass hand centred at a first frequency F1, and zeros at other frequencies, and second filter means having a pass band centred at a second frequency F2, which coincides with a zero of said first filter.

2. A digitizer tablet for receiving signals from a stylus, the stylus (6) being arranged for producing a stylus position determining signal (55) and a data signal (50), characterized in that said stylus (6) includes first signal producing means for producing said stylus position determining signal and second signal producing means for producing said data signal, said first and second signal producing means being arranged such that a data signal (50) can be delivered from the stylus (6) at the same time as a stylus position determining signal (55). and the tablet including first filter means for blocking a first frequency band of a signal produced by said stylus (6) and second filter means for passing said first frequency band.

3. A digitizer tablet for receiving signals from a stylus. the stylus (6) being arranged for producing a stylus position determining signal (55) and a data signal (50), characterized in that said stylus (6) includes first signal producing means for producing said stylus position determining signal and second signal producing means for producing said data signal, said first and second signal producing means being arranged such that a data signal (5) can be delivered from the stylus (6) at the same time as a stylus position determining signal (55). and the tablet including filter means for tracking any drift that may occur in the frequency of one of the signals, maintaining a pass band centred on the tracked signal. and maintaining a zero centred on the other signal.

4. A stylus (6) as claimed in Claim 1, 2 or 3, and including oscillator means, and wherein said first signal producing means and said second signal producing means are based on said oscillator means.

5. A stylus (6) as claimed in Claim 1, 2 or 3, wherein said first signal producing means comprises first oscillator means and said second signal producing means comprises second oscillator means.

6. A stylus (6) as claimed in any one of the preceding claims, wherein said stylus position determining signal (55) has a frequency F and said data signal (50) has a frequency nF, wherein n is an integer.

7. A stylus (6) as claimed in any one of Claims 1 to 5, where said stylus position determining signal (55) has a frequency F and said data signal (5) has a frequency F/n, wherein n is an integer.

8. A digitizer tablet (3) for receiving signals from a stylus (6) as claimed in any one of Claims 1 to 8, characterized by first filter means for blocking a first frequency band of a signal produced by said stylus (6) and second filter means for passing said first frequency band.

9. A digitizer tablet (3) for use with a stylus (6) as claimed in any one of Claims 1 to 7. characterized by receiver means for receiving one of the signals and comprising a rectifier for rectifying the received signal, integrator means for periodically integrating the rectified signal and phase-locked-loop means for synchronizing the period of integration with one of the signals.

10. A digitizer tablet (3) for use with a stylus as claimed in any one of Claims 1 to 7, characterized by filter means for tracking any drift that may occur in the frequency of one of the signals, maintaining a pass band centred on the tracked signal, and maintaining a zero centred on the other signal.

## Patentansprüche

1. Digitalisiertablett zum Empfangen von Signalen von einem Pen, wobei der Pen (6) die Aufgabe hat, ein Penpositionsermittlungssignal (55) und ein Datensignal (50) zu erzeugen, dadurch gekennzeichnet, dass der genannte Pen (6) ein erstes Signalerzeugungsmittel zum Erzeugen des genannten Penpositionsermittlungssignals und ein zweites Signalerzeugungsmittel zum Erzeugen des genannten Datensignals aufweist, wobei das genannte erste und das genannte zweite Signalerzeugungsmittel so angeordnet sind, dass ein Datensignal (5) von dem Pen (6) gleichzeitig mit einem Penpositionsermittlungssignal (55) gesendet werden kann, und wobei das Tablett ein erstes Filtermittel mit einem auf einer ersten Frequenz F1 zentrierten Passband und Nullen auf anderen Frequenzen und ein zweites Filtermittel mit einem auf einer zweiten Frequenz F2 zentrierten Passband aufweist, die mit einer Null des genannten ersten Filters zusammenfällt.

2. Digitalisiertablett zum Empfangen von Signalen von einem Pen, wobei der Pen (6) die Aufgabe hat, ein Penpositionsermittlungssignal (55) und ein Datensignal (50) zu erzeugen, dadurch gekennzeichnet, dass der genannte Pen (6) ein erstes Signalerzeugungsmittel zum Erzeugen des genannten Penpositionsermittlungssignals und ein zweites Signalerzeugungsmittel zum Erzeugen des genannten Datensignals aufweist, wobei das genannte erste und das genannte zweite Signalerzeugungsmittel so angeordnet sind, dass ein Datensignal (50) von dem Pen (6) gleichzeitig mit einem Penpositionsermittlungssignal (55) gesendet werden kann, und wobei das Tablett ein erstes Filtermittel zum Blockieren eines ersten Frequenzbandes eines von dem genannten Pen (6) erzeugten Signals und ein zweites Filtermittel zum Durchlassen des genannten ersten Frequenzbandes aufweist.

3. Digitalisiertablett zum Empfangen von Signalen von einem Pen, wobei der Pen (6) die Aufgabe hat, ein Penpositionsermittlungssignal (55) und ein Datensignal (50) zu erzeugen, dadurch gekennzeichnet, dass der genannte Pen (6) ein erstes Signalerzeugungsmittel zum Erzeugen des genannten Penpositionsermittlungssignals und ein zweites Signalerzeugungsmittel zum Erzeugen des genannten Datensignals aufweist, wobei das genannte erste und das genannte zweite Signalerzeugungsmittel so angeordnet sind, dass ein Datensignal (5) von dem Pen (6) gleichzeitig mit einem Penpositionsermittlungssignal (55) gesendet werden kann, und wobei das Tablett ein erstes Filtermittel zum Verfolgen von Drift aufweist, der in der Frequenz eines der Signale auftreten kann, Zentrierthalten eines Passbandes auf dem verfolgten Signal und Zentrierthalten einer Null auf dem anderen Signal.

4. Pen (6) nach Anspruch 1, 2 oder 3 mit einem Oszillator, wobei das genannte erste Signalerzeugungsmittel und das genannte zweite Signalerzeugungsmittel auf dem genannten Oszillator basieren.

5. Pen (6) nach Anspruch 1, 2 oder 3, wobei das genannte erste Signalerzeugungsmittel einen ersten Oszillator und das genannte zweite Signalerzeugungsmittel einen zweiten Oszillator umfasst.

6. Pen (6) nach einem der vorherigen Ansprüche, bei dem das genannte Penpositionsermittlungssignal (55) eine Frequenz F und das genannte Datensignal (50) eine Frequenz nF hat, wobei n eine ganze Zahl ist.

7. Pen (6) nach einem der Ansprüche 1 bis 5, bei dem das genannte Penpositionsermittlungssignal (55) eine Frequenz F und das genannte Datensignal (5) eine Frequenz F/n hat, wobei n eine ganze Zahl ist.

8. Digitalisiertablett (3) zum Empfangen von Signalen von einem Pen (6) nach einem der Ansprüche 1 bis 8, gekennzeichnet durch ein erstes Filtermittel zum Blockieren eines ersten Frequenzbandes eines von dem genannten Pen (6) erzeugten Signals und durch ein zweites Filtermittel zum Durchlassen des genannten ersten Frequenzbandes.

9. Digitalisiertablett (3) zur Verwendung mit einem Pen (6) nach einem der Ansprüche 1 bis 7, gekennzeichnet durch ein Empfangsmittel zum Empfangen eines der Signale und umfassend einen Gleichrichter zum Richten des empfangenen Signals, einen Integrator zum periodischen Integrieren des gerichteten Signals und einen Phasenregelkreis zum Synchronisieren der Integrationsperiode mit einem der Signale.

10. Digitalisiertablett (3) zur Verwendung mit einem Pen nach einem der Ansprüche 1 bis 7, gekennzeichnet durch ein Filtermittel zum Verfolgen von Drift, der möglicherweise in der Frequenz eines der Signale auftritt, Zentrierthalten eines Passbandes auf dem verfolgten Signal und Zentrierthalten einer Null auf dem anderen Signal.

## Revendications

1. Tablette à digitaliser pour recevoir des signaux d'un stylet, le stylet (6) étant arrangé pour produire un signal déterminateur de position de stylet (55) et un signal de données (50), caractérisée en ce que ledit stylet (6) inclut un premier moyen producteur de signal pour produire ledit signal déterminateur de position de stylet et un deuxième moyen producteur de signal pour produire ledit signal de données, lesdits premier et deuxième moyens producteurs de signaux étant arrangés de sorte qu'un signal de données (5) peut être fourni par le stylet (6) en même temps qu'un signal déterminateur de position de stylet (55), et la tablette incluant un premier moyen de filtre ayant une bande passante centrée sur une première fréquence F1, et des zéros aux autres fréquences, et un deuxième moyen de filtre ayant une bande passante centrée sur une deuxième fréquence F2, qui coïncide avec un zéro dudit premier filtre.

2. Tablette à digitaliser pour recevoir des signaux d'un stylet, le stylet (6) étant arrangé pour produire un signal déterminateur de position de stylet (55) et un signal de données (50), caractérisée en ce que ledit stylet (6) inclut un premier moyen producteur de signal pour produire ledit signal déterminateur de position de stylet et un deuxième moyen producteur de signal pour produire ledit signal de données, lesdits premier et deuxième moyens producteurs de signaux étant arrangés de sorte qu'un signal de données (50) peut être fourni par le stylet (6) en même temps qu'un signal déterminateur de position de stylet (55), et la tablette incluant un premier moyen de filtre pour bloquer une première bande de fréquence d'un signal produit par ledit stylet (6) et un deuxième moyen de filtre pour passer ladite première bande de fréquence.

3. Une tablette à digitaliser pour recevoir des signaux d'un stylet, le stylet (6) étant arrangé pour produire un signal déterminateur de position de stylet (55) et un signal de données (50), caractérisée en ce que ledit stylet (6) inclut un premier moyen producteur de signal pour produire ledit signal déterminateur de position de stylet et un deuxième moyen producteur de signal pour produire ledit signal de données, lesdits premier et deuxième moyens producteurs de signaux étant arrangés de sorte qu'un signal de données (5) peut être fourni par le stylet (6) en même temps qu'un signal déterminateur de position de stylet (55), et la tablette incluant un moyen de filtre pour suivre tout glissement qui peut survenir dans la fréquence d'un des signaux, maintenant une bande passante centrée sur le signal suivi, et maintenant un zéro centré sur l'autre signal.

4. Stylet (6) tel que revendiqué dans la revendication 1, 2 ou 3, et incluant un moyen d'oscillateur, et dans lequel ledit premier moyen producteur de signal et ledit deuxième moyen producteur de signal sont basés sur ledit moyen d'oscillateur.

5. Stylet (6) tel que revendiqué dans la revendication 1, 2 ou 3, dans lequel ledit premier moyen producteur de signal comprend un premier moyen d'oscillateur et ledit deuxième moyen producteur de signal comprend un deuxième moyen d'oscillateur.

6. Stylet (6) tel que revendiqué dans l'une quelconque des revendications précédentes, dans lequel ledit signal déterminateur de position de stylet (55) a une fréquence F et ledit signal de données (50) a une fréquence nF, dans laquelle n est un nombre entier.

7. Stylet (6) tel que revendiqué dans l'une quelconque des revendications 1 à 5, dans lequel ledit signal déterminateur de position de stylet (55) a une fréquence F et ledit signal de données (5) a une fréquence F/n, dans laquelle n est un nombre entier.

8. Tablette à digitaliser (3) pour recevoir des signaux d'un stylet (6) telle que revendiquée dans l'une quelconque des revendications 1 à 8, caractérisée par un premier moyen de filtre pour bloquer une première bande de fréquence d'un signal produit par ledit stylet (6) et un deuxième moyen de filtre pour passer ladite première bande de fréquence.

9. Tablette à digitaliser (3) à utiliser avec un stylet (6) telle que revendiquée dans l'une quelconque des revendications 1 à 7, caractérisée par un moyen de récepteur pour recevoir l'un des signaux et comprenant un redresseur pour redresser le signal reçu, un moyen d'intégrateur pour intégrer périodiquement le signal redressé et un moyen de boucle à verrouillage de phase pour synchroniser la période d'intégration avec l'un des signaux.

10. Tablette à digitaliser (3) à utiliser avec un stylet telle que revendiquée dans l'une quelconque des revendications 1 à 7, caractérisée par un moyen de filtre pour suivre tout glissement qui peut survenir dans la fréquence de l'un des signaux, maintenant une bande passante centrée sur le signal suivi, et maintenant un zéro centré sur l'autre signal.
